# EUROPEAN PATENT APPLICATION

(11) **EP 2 744 023 A1**
(43) Date of publication of application: **18.06.2014**
(21) Application number: 13759657.3
(22) Date of filing: 24.04.2013
(51) Int. Cl.: H01M 4/58

(54) **LITHIUM-RICH ANODE MATERIAL, LITHIUM BATTERY ANODE, AND LITHIUM BATTERY**

(30) Priority: 07.11.2012 CN 201210439685
(71) Applicant: Huawei Technologies Co., Ltd., Shenzhen, Guangdong 518129 (CN)
(72) Inventor: CHEN, Chaohui, Shenzhen, Guangdong 518129 (CN)
(74) Representative: Goddar, Heinz J.
(86) International application number: PCT/CN2013/074584
(87) International publication number: WO 2014/071724

(57) **Abstract**

The present invention discloses a lithium-rich anode material, a lithium battery anode, and a lithium battery, where the structural formula of the lithium-rich anode material is as follows: z[xLi₂MO₃·(1-x)LiMeO₂]·(1-z)Li_{3-2y}M'_{2y}PO₄, where 0 < x < 1, 0 < y < 1, 0 < z < 1; M is at least one of elements Mn, Ti, Zr, and Cr, Me is at least one of elements Mn, Co, Ni, Ti, Cr, V, Fe, Al, Mg, and Zr, and M' is at least one of elements Fe, Co, Ni, V, Mg, and Mn. Both the lithium battery anode and the lithium battery include the lithium-rich anode material. Because of the high capability of withstanding high voltages, the high initial charge-discharge efficiency, and the safety of the lithium-rich anode material, the lithium battery has excellent energy density, discharge capacity, cycle life, and rate performance.

## Description

### TECHNICAL FIELD

The present invention relates to the field of battery technologies, and in particular, to a lithium-rich anode material, a lithium battery anode, and a lithium battery.

### BACKGROUND

Among various energy storage technologies, lithium-ion batteries are characterized by high energy density, long cycle life, light weight, and no pollution, and are considered a next-generation highly-efficient portable chemical power supply. Nowadays, lithium-ion batteries have been widely used in digital cameras, smart phones, laptop computers and the like. With further enhancement of the energy density of lithium-ion batteries, they will be gradually used in electric vehicles (electric bicycles, electric automobiles, hybrid automobiles), power grids and other large-scale energy storage fields.

Currently, mobile electronic devices have increasingly growing requirements for high-capacity and long-life batteries, and people impose higher requirements on performance of lithium-ion batteries. Too low capacity of lithium-ion batteries has bottlenecked the development of the battery industry. The development of anode materials has become a major bottleneck of higher energy density of lithium-ion batteries. Currently, commonly used anode materials include lithium cobalt oxide (LCO), lithium manganese oxide (LMO), lithium iron phosphate (LFP), three-element Li(NiₓCo_{y}Mn_{1-x-y})O₂ (NCM), and the like, but the specific capacity of such anode materials are mostly less than 160 mAh/g.

To further improve the specific capacity of the anode materials, a manganese-based lithium-rich solid solution (xLi₂MnO₃·(1-x)LiMO₂, (layered-layered structure, M is equal to one or more of the following elements: Ni, Co, Mn, Ti, and Zr)) has been put forward in recent years. Because of a high discharge capacity (discharge capacity > 250 mAh/g, charging voltage > 4.6 V) and a low cost, the solution has become a trend of the next-generation anode materials. However, the Layered-Layered lithium-rich solid solution has serious drawbacks: in the process of charging and discharging (> 4.5 V), sensitization reaction occurs on the surface. The specific reaction is as follows:

*LiMO*₂ → *Li*₁₋*ₓMO_{2-δ}* + *xLi*⁺ +*δ*/2*O*₂ + *xe* (1)

*Li*₂*MnO₃ → MnO*₂ *+ 2Li*⁺ + 1/2*O*₂+2*e* (2)

After the foregoing reaction occurs on the surface of the Layered-Layered lithium-rich solid solution, the following adverse impact is caused on electrochemical properties of the material:
1) Generation of O₂ will form Li₂O. In the charging process, Li₂O hardly retreats, resulting in very low efficiency of initial charge and discharge (∼70%);
2) The cycle performance of the material is suppressed with the change of the structure; and
3) Surface impairment also causes an adverse impact on the rate performance of the material.

At the same time, when the anode potential is higher than 4.5 V, in the cycling process, the Mn in the Layered-Layered lithium-rich solid solution material may be precipitated, resulting in rapid attenuation of the material capacity.

In conclusion, the lithium-rich solid solution of a Layered-layered structure in the prior art has a high theoretical capacity, but results in rapid attenuation of capacity due to instability of the material under high-voltage conditions.

Facing the drawbacks of the lithium-rich solid solution of a Layered-layered structure, researchers modify properties of the material to attempt to compensate for inherent drawbacks of the material, as detailed below:

### 1. Lithium-rich solid solution of a Layered-rocksalt structure:

The Argonne National Laboratory has synthesized a new Layered-rocksalt structure: xLi₂MnO₃·(1-x)MO, where 0 ≤x ≤1, and has applied the new structure to anode materials of lithium-ion batteries. The lithium-rich solid solution structure of the new structure has excellent initial charge-discharge performance and cycle performance.

However, the lithium-rich solid solution of the Layered-rocksalt structure has disadvantages: When the lithium-rich solid solution of the Layered-rocksalt structure is applied to lithium-ion batteries (compared with conventional Layered-Layered solid solution xLi₂MnO₃·(1-x)LiMO₂, 0 ≤ x ≤1), the Li content decreases, which reduces the discharge capacity of the material.

### 2. Lithium-rich solid solution of a Layered-Spinel structure:

A. Manthiram et al. have synthesized a new lithium-rich solid solution of a Layered-Spinel structure: xLi[Li_{0.2}Mn_{0.6}Ni_{0.17}Co_{0.03}]O₂·(1-x)Li[Mn_{1.5}Ni_{0.452}Co_{0.075}]O₄, 0 ≤x ≤ 1, and have applied the new structure to anode materials of lithium-ion batteries, having excellent initial charge-discharge efficiency and cycle performance by virtue of stability of the Spinel structure.

However, the lithium-rich solid solution of the Layered-Spinel structure also has disadvantages: Although the material of the Spinel structure is more stable than the Layered structure, the material of the Spinel structure has a lower discharge capacity. Therefore, the anode material of the Layered-Spinel structure has lower performance than the anode material of the Layered-Layered structure.

As seen from the above, the lithium-rich solid solution materials in the prior art have disadvantages such as low capability of withstanding high voltages and low discharge capacity, and can hardly be commercialized.

### SUMMARY

### Technical Problem

An objective of the embodiments of the present invention is to overcome disadvantages in the prior art, and provide a safe lithium-rich anode material having a high capability of withstanding high voltages and a high initial charge-discharge efficiency.

Another objective of the embodiments of the present invention is to provide a lithium battery anode containing the lithium-rich anode material.

Another objective of the embodiments of the present invention is to provide a lithium battery containing the lithium battery anode.

### Technical Solution

To fulfill the foregoing objectives, the present invention discloses the following technical solutions:

A lithium-rich anode material has the following structural formula:

z[xLi₂MO₃·(1-x)LiMeO₂]·(1-z)Li_{3-2y}M'_{2y}PO₄,

where
Li_{3-2y}M'_{2y}PO₄ is distributed as an olivine structure in a lattice of the xLi₂MO₃·(1-x)LiMeO₂; x and z are molar stoichiometric ratios, where 0 < x < 1, 0 < y < 1, 0 < z < 1; M is at least one of elements Mn, Ti, Zr, and Cr, Me is at least one of elements Mn, Co, Ni, Ti, Cr, V, Fe, Al, Mg, and Zr, and M' is at least one of elements Fe, Co, Ni, V, Mg, and Mn.

Preferably, the xLi₂MO₃·(1-x)LiMeO₂ in the structural formula z[xLi₂MO₃·(1-x)LiMeO₂]·(1-z)Li_{3-2y}M'_{2y}PO₄ is in a layered-olivine structure.

Or, preferably, the particle size of the lithium-rich anode material is from 1 µm to 15 µm.

Further, a process for constructing a lithium-rich anode material includes the following steps:
obtaining a precursor of a lithium-rich anode material whose structural formula is xLi₂MO₃·(1-x)LiMeO₂, where x is a molar stoichiometric ratio, 0 < x < 1, M is at least one of elements Mn, Ti, Zr, and Cr, and Me is at least one of elements Mn, Co, Ni, Ti, Cr, V, Fe, Al, Mg, and Zr;
dissolving ammonium phosphate salt, soluble M' salt, and soluble lithium salt in a solvent according to molar stoichiometric ratios of corresponding elements in the structural formula Li_{3-2y} M'_{2y}PO₄ to construct a mixed solution, where 0 < y < 1, M' is at least one of elements Fe, Co, Ni, V, Mg, and Mn;
dispersing the precursor of the lithium-rich anode material into the mixed solution according to the molar stoichiometric ratios of xLi₂MO₃·(1-x) LiMeO₂ and Li_{3-2y}M'_{2y}PO₄ in the structural formula z[xLi₂MO₃·(1-x)LiMeO₂]·(1-z)Li_{3-2y}M'_{2y}PO₄, and then stirring the solution in a water bath of an oxygen-free environment until the solution is dried to obtain a dry mixture; and
pulverizing the dry mixture, annealing it in an oxygen-free environment, and cooling it to obtain the lithium-rich anode material whose structural formula is z[xLi₂MO₃·(1 -x)LiMeO₂]·(1-z)Li_{3-2y}M'_{2y}PO₄.

Preferably, in the step of constructing the mixed solution, the soluble M' salt is at least one of a nitrate, sulfate, acetate, and chloride of M'.

Preferably, in the step of constructing the mixed solution, the soluble lithium salt is at least one of a lithium nitrate, a lithium sulfate, a lithium acetate, and a lithium chloride.

Preferably, in the step of constructing the mixed solution, the solvent is at least one of a glycolic acid and a formic acid.

Specifically, the M' salt is an M' nitrate, and the soluble lithium salt is a lithium nitrate.

Preferably, in the step of constructing the dry mixture, a temperature of the annealing treatment is from 500°C to 800°C, and annealing duration is from 12 h to 48 h.

Preferably, in the step of constructing the dry mixture, a temperature of the water bath agitation is from 50°C to 100°C.

Preferably, the oxygen-free environment is an environment filled with an inert gas or a vacuum environment.

Preferably, a process of obtaining the precursor of the lithium-rich anode material whose structural formula is xLi₂MO₃·(1-x)LiMeO₂ is:
weighing out M(NO₃)₂, Me(NO₃)₂, and a lithium compound according to molar stoichiometric ratios of corresponding elements in the structural formula xLi₂MO₃·(1-x)LiMeO₂;
dissolving the M(NO₃)₂ and the Me(NO₃)₂ to construct a second mixed solution;
adding the second mixed solution into an oxyhydroxide solution, stirring the solution to make it react, separating solid from liquid of a generated precipitate, washing the solid, and drying it in an oxygen-free environment to obtain a dry precipitate; and
mixing the precipitate with the lithium compound into a mixture, performing a first sintering process for the mixture in an oxygen-free environment, pulverizing the mixture, and then performing a second sintering process in an oxygen-free environment to obtain a precursor of the lithium-rich anode material whose structural formula is xLi₂MO₃·(1-x)LiMeO₂.

Further, preferably, a temperature of the first sintering process is from 350°C to 600°C, and a sintering duration is from 3 h to 12 h.

Further, preferably, a temperature of the second sintering process is from 700°C to 1000°C, and a sintering duration is from 3 h to 12 h.

Further, preferably, the lithium compound is at least one of a lithium hydroxide and a lithium salt.

Further, a lithium battery anode is disclosed, which includes a current collector and an anode material bonded to the current collector, where the anode material is the lithium-rich anode material.

Further, a lithium battery is disclosed, where the lithium battery includes the lithium battery anode.

### Beneficial Effect

In the lithium-rich anode material whose structural formula is z[xLi₂MO₃·(1-x)LiMeO₂]·(1-z)Li_{3-2y}M'_{2y}PO₄ in the foregoing embodiments, Li_{3-2y}M'_{2y}PO₄ is in an olivine structure, and is uniformly dispersed in the microscopic lattice of the Li₂MO₃·(1-x)LiMeO₂, and therefore, in a charge and discharge process, embedding and extraction of lithium ions occur in an Li_{3-2y}M'_{2y}PO₄ olivine structure, thereby effectively improving the capability of the lithium-rich anode material in withstanding high voltages, enhancing capacity stability of the lithium-rich anode material, reducing surface sensitization reaction of the lithium-rich anode material, reducing oxygen evolution, and effectively improving the initial charge-discharge efficiency, safety and cycle life of the material.

In the process for constructing the lithium-rich anode material in the foregoing embodiments, it is necessary only to blend corresponding components according to molar stoichiometric ratios of elements in the structural formula of the lithium-rich anode material, and then perform annealing. Each process is based on mature technologies and performed under easy-to-control conditions, thereby achieving high production efficiency and reducing production costs.

In the foregoing embodiments, the lithium battery anode includes the lithium-rich anode material, and the lithium-rich anode material has a high capability of withstanding high voltages, and therefore, the lithium battery anode has a high capacity and stable performance during operation.

In the foregoing embodiments, the lithium battery includes the lithium battery anode. Therefore, the lithium battery has excellent energy density, discharge capacity, cycle life and rate performance. Because of such excellent performance of the lithium battery, the application scope of the lithium battery is expanded.

### BRIEF DESCRIPTION OF DRAWINGS

The following gives more details about the present invention with reference to accompanying drawings and specific embodiments. In the accompanying drawings:
FIG. 1 is a flowchart of a process for constructing a lithium-rich anode material according to an embodiment of the present invention;
FIG. 2 is a flowchart of a process for constructing a lithium battery anode according to an embodiment of the present invention; and
FIG. 3 is a flowchart of a process for constructing a lithium battery according to an embodiment of the present invention.

### DESCRIPTION OF EMBODIMENTS

To make the objectives, technical solutions, and advantages of the present invention more comprehensible, the following further describes the present invention in detail with reference to the accompanying drawings and embodiments. It is understandable that the specific embodiments are merely used to explain the present invention and are not intended to limit the present invention.

An embodiment of the present invention provides a safe lithium-rich anode material having a high capability of withstanding high voltages and a high initial charge-discharge efficiency. The structural formula of the lithium-rich anode material is as follows:

z[xLi₂MO₃·(1-x)LiMeO₂]·(1-z)Li_{3-2y}M'_{2y}PO₄, where x and z are molar stoichiometric ratios, 0 < x < 1, 0 < y < 1, 0 < z < 1; M is at least one of elements Mn, Ti, Zr, and Cr, Me is at least one of elements Mn, Co, Ni, Ti, Cr, V, Fe, Al, Mg, and Zr, and M' is at least one of elements Fe, Co, Ni, V, Mg, and Mn. In the microscopic structure of the lithium-rich anode material, the xLi₂MO₃·(1-x)LiMeO₂ is in a layered structure, the Li_{3-2y}M'_{2y}PO₄ is dispersed as an olivine structure in the lattice of the xLi₂MO₃·(1-x)LiMeO₂, that is, the structural formula z[xLi₂MO₃·(1-x)LiMeO₂]·(1-z)Li_{3-2y}M'_{2y}PO₄ is in a layered-olivine structure. In this way, Li_{3-2y}M'_{2y}PO₄ in the lithium-rich anode material whose structural formula is z[xLi₂MO₃·(1-x)LiMeO₂]·(1-z)Li_{3-2y}M'_{2y}PO₄ is in an olivine structure, and is uniformly dispersed in a layered microscopic lattice of the Li₂MO₃·(1-x)LiMeO₂, and therefore, in a charge and discharge process, embedding and extraction of lithium ions occur in an Li_{3-2y}M'_{2y}PO₄ olivine structure, thereby effectively improving the capability of the lithium-rich anode material in withstanding high voltages, enhancing capacity stability of the lithium-rich anode material, reducing surface sensitization reaction of the lithium-rich anode material, reducing oxygen evolution, and therefore effectively improving the initial charge-discharge efficiency, safety and cycle life of the material.

The inventor has found that, by controlling the particle size of the lithium-rich anode material in the foregoing embodiment, the discharge capacity, the rate performance, the initial charge-discharge efficiency, and the cycle life of the lithium-rich anode material can be improved effectively. Therefore, in a preferred embodiment, the particle size of the lithium-rich anode material is from 1 µm to 15 µm, and more preferably, from 5 µm to 10 µm.

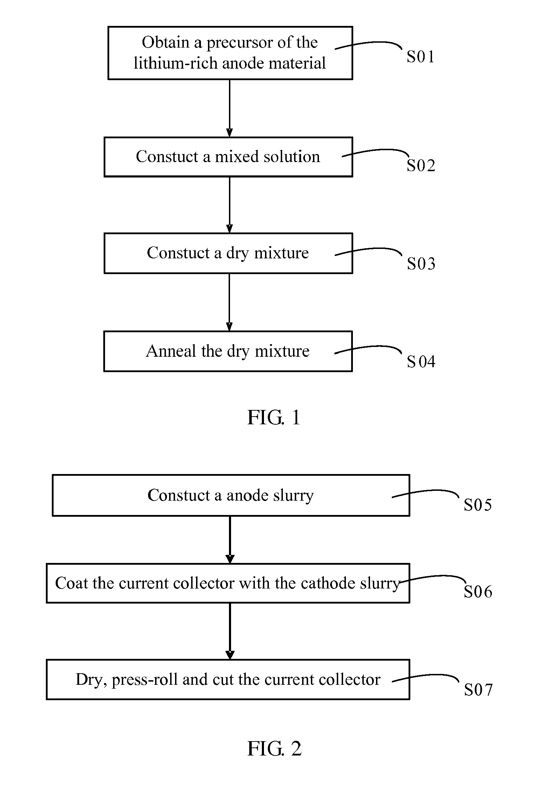

Correspondingly, an embodiment of the present invention provides a process for constructing a lithium-rich anode material. As illustrated in FIG. 1, the process of constructing the lithium-rich anode material includes the following steps:
Step S01: Obtain a precursor of the lithium-rich anode material:

Obtain a precursor of a lithium-rich anode material whose structural formula is xLi₂MO₃·(1-x)LiMeO₂, where x is a molar stoichiometric ratio, 0 < x < 1, M is at least one of elements Mn, Ti, Zr, and Cr, and Me is at least one of elements Mn, Co, Ni, Ti, Cr, V, Fe, Al, Mg, and Zr.

Step S02: Construct a mixed solution:

Dissolve ammonium phosphate salt, soluble M' salt, and soluble lithium salt in a solvent according to molar stoichiometric ratios of corresponding elements in the structural formula Li_{3-2y} M'_{2y}PO₄ to construct a mixed solution, where 0 < y < 1, M' is at least one of elements Fe, Co, Ni, V, Mg, and Mn.

Step S03: Construct a dry mixture:

Disperse the precursor of the lithium-rich anode material in step S01 into the mixed solution in step S02 according to the molar stoichiometric ratios of xLi₂MO₃·(1-x) LiMeO₂ and Li_{3-2y}M'_{2y}PO₄ in the structural formula z[xLi₂MO₃·(1-x)LiMeO₂]·(1-z)Li_{3-2y}M'_{2y}PO₄, and then agitate the solution in a water bath of an oxygen-free environment until the solution is dried to obtain a dry mixture.

Step S04: Anneal the dry mixture:

Pulverize the dry mixture in step S03, anneal the mixture in an oxygen-free environment, and cool it to obtain the lithium-rich anode material whose structural formula is z[xLi₂MO₃·(1-x)LiMeO₂]·(1-z)Li_{3-2y}M'_{2y}PO₄.

Specifically, the precursor of the lithium-rich anode material whose structural formula is xLi₂MO₃·(1-x)LiMeO₂ in step S01 is purchasable from a market. It may also be constructed in the following way, including the following steps:

Step S011: Weigh out M(NO₃)₂, Me(NO₃)₂, and a lithium compound according to molar stoichiometric ratios of corresponding elements in the structural formula xLi₂MO₃·(1-x)LiMeO₂.

Step S012: Dissolve the M(NO₃)₂ and the Me(NO₃)₂ in step S011 to construct a second mixed solution.

Step S013: Add the second mixed solution in step S012 into an oxyhydroxide solution, agitate the solution to make it react, separate solid from liquid of a generated precipitate, wash the solid, and dry it in an oxygen-free environment to obtain a dry precipitate.

Step S014: Mix the precipitate in step S013 with the lithium compound in step S011 into a mixture, perform a first sintering process for the mixture in an oxygen-free environment, pulverize the mixture, and then perform a second sintering process in an oxygen-free environment to obtain a precursor of the lithium-rich anode material whose structural formula is xLi₂MO₃·(1-x)LiMeO₂.

As mentioned above, M in the M(NO₃)₂ in step S011 is at least one of elements Mn, Ti, Zr, and Cr, Me in the Me(NO₃)₂ is at least one of elements Mn, Co, Ni, Ti, Cr, V, Fe, Al, Mg, and Zr; the lithium compound is a lithium salt or a lithium hydroxide, and the lithium salt may be a lithium salt commonly used in the art.

In step S012, water is preferred as a solvent for dissolving the M(NO₃)₂ and the Me(NO₃)₂, and distilled water is even more preferred. Other solvents well known in the art for dissolving the M(NO₃)₂ and the Me(NO₃)₂ may also be applied in the embodiment of the present invention. The concentration of the M(NO₃)₂ in the constructed second mixed solution is preferably from 0.01 mol/L to 2.5 mol/L. However, this embodiment sets no special limitation on the concentration of the second mixed solution.

In step S013, after the second mixed solution is added into an oxyhydroxide solution, M and Me ions combine with OH⁻ to generate a precipitate. The amount of the oxyhydroxide should be enough to ensure that all the M and Me ions are precipitated. The oxyhydroxide may be a soluble oxyhydroxide commonly used in the art, but is preferably a lithium hydroxide.

The separating solid from liquid and the washing in step S013 are performed in a common way in the art, and this embodiment of the present invention sets no special limitation or requirement. Preferably, the drying in an oxygen-free environment is: drying the washed precipitate at a temperature from 150°C to 250°C in an argon-protected environment, for example, for 12 hours, to remove the reaction solvent and the detergent.

In step S014, before the precipitate is mixed with the lithium compound, the precipitate is preferably pulverized; then the precipitate is mixed with the lithium compound uniformly, the mixture is pressed into pellets in a general manner in the art, and then the pellets are sintered. The sintering process includes two stages: The first stage is to put the pellets into an oxygen-free environment to undergo a first sintering process at a temperature from 350°C to 600°C for 3 h to 12 h; and the second stage is to pulverize a sinter obtained in the sintering process in the first stage, and then put the pulverized sinter into an oxygen-free environment to undergo a second sintering process at a temperature from 700°C to 1000°C for 3 h to 12 h.

Specifically, the ammonium phosphate salt in step S02 is a ammonium phosphate salt commonly used in the art, such as monoammonium phosphate, diammonium phosphate, ammonium phosphate, or the like. Preferably, the M' salt is at least one of a nitrate, sulfate, acetate, and chloride of M'. The soluble lithium salt is preferably at least one of a lithium nitrate, a lithium sulfate, a lithium acetate, and a lithium chloride. The solvent for dissolving the M' salt and the soluble lithium salt is preferably a glycolic acid, a formic acid, or at least one of such organic acids. In a preferred embodiment, the M' salt is Mₘ(NO₃), the lithium salt is a lithium nitrate, and the solvent for dissolving the M' salt and the lithium salt is a glycolic acid. The preferred solvent can effectively dissolve the M' salt and the soluble lithium salt, disperse the components uniformly, ensure the stability of each phase of the solution, and leave less residual impurities after subsequent treatment. In addition, in step S02 in the above embodiment, no special requirement is imposed on the concentration of the constructed mixed solution. Any concentration is appropriate if all components can be dissolved in the solution. The concentration of the mixed solution can be adjusted flexibly according to practical production.

In step S03, the precursor of the lithium-rich anode material is dispersed in the mixed solution constructed in step S02, preferably in a manner of ultrasonic dispersion. It may also be dispersed in other manners well known in the art. No matter which dispersion manner is applied, the precursor of the lithium-rich anode material should be uniformly dispersed in the mixed solution.

In step S03, the mixed solution obtained after the dispersion is heated through a water bath, and agitated until it is dried. The water bath heating makes the mixture heated uniformly, and leads to uniform distribution of all components of the final dried mixture. The temperature of the water bath heating is preferably from 50°C to 100°C, and duration is preferably from 4 to 24 hours. The oxygen-free environment may be an environment filled with an inert gas or a vacuum environment.

In step S04, the temperature of the annealing treatment is preferably from 500°C to 800°C, and annealing duration is preferably from 12 h to 48 h. The annealing treatment under such preferred conditions leads to re-arrangement of molecules of the mixture, forms a stable lattice, and results in the lithium-rich anode material whose structural formula is z[xLi₂MO₃·(1-x) LiMeO₂]·(1-z)Li_{3-2y}M'_{2y}PO₄. The annealing treatment may be performed in a muffle furnace in an oxygen-free environment, and the oxygen-free environment may be an environment filled with an inert gas or a vacuum environment. After the annealing treatment, the oxygen-free environment goes on until it cools to a room temperature naturally.

Further, in order to control the particle size of the lithium-rich anode material, after step S04, it is preferable to pulverize the constructed lithium-rich anode material. The particle size is preferably controlled within a range from 1 µm to 15 µm, and more preferably, controlled within a range from 5 µm to 10 µm.

In conclusion, in the process for constructing the lithium-rich anode material, it is necessary only to blend corresponding components according to molar stoichiometric ratios of elements in the structural formula of the lithium-rich anode material, and then perform annealing. Each process is based on mature technologies and performed under easy-to-control conditions, thereby achieving high production efficiency and reducing production costs.

Further, the present invention further provides a lithium battery anode, which includes a current collector and an anode material bonded to the current collector, where the anode material is the lithium-rich anode material described above. For brevity, no repeated description is given here any further. The current collector may be a current collector commonly used in the art, such as copper foil. In this way, the lithium battery anode includes the lithium-rich anode material, and the lithium-rich anode material has a high capability of withstanding high voltages, excellent initial charge-discharge efficiency and safety, and therefore, the anode during operation has stable performance, a high capability of withstanding high voltages, a high initial charge-discharge efficiency, and a long cycle life.

Correspondingly, an embodiment of the present invention further provides a process for constructing a lithium battery anode. As illustrated in FIG. 2, the process of constructing the lithium battery anode includes the following steps:

Step S05: Construct an anode slurry: Mix the lithium-rich anode material with an electrode conductive agent, a bonding agent, and a solvent to construct an anode slurry.

Step S06: Coat the current collector with the anode slurry constructed in step S05.

Step S07: Dry, press-roll and cut the current collector: Dry, press-roll, and cut the current collector coated with the anode slurry in step S06 to obtain a lithium anode.

Specifically, the weight ratio of the lithium-rich anode material, the electrode conductive agent, the bonding agent, and the solvent in step S05 is preferably (8 to 9.5):(0.2 to 1.5):(0.3 to 1):100, and more preferably, 8:1:1:100. The electrode conductive agent is acetylene black; the bonding agent is sodium carboxymethyl cellulose (CMC), and the solvent is preferably water. Nevertheless, other common substances in the art may serve as the electrode conductive agent, the bonding agent, and the solvent.

The anode slurry coating manner in step S06 and the manners of drying, press-rolling, and cutting the current collector in step S07 may be manners commonly used in the art.

In the process for constructing the lithium battery anode, it is necessary only to coat the current collector with the anode slurry containing the lithium-rich anode material, and then perform drying, press-rolling, and cutting. The process is simple, the conditions are easy to control, and the pass rate and the production efficiency are high.

An embodiment of the present invention further provides a lithium battery, where the lithium battery includes the lithium battery anode described above.

Preferably, the lithium battery is a chemical lithium battery subject to electrochemically reaction, such as a lithium-ion battery and a lithium polymer battery.

In this way, because the lithium battery includes the lithium battery anode, the lithium battery has stable electrochemical properties, a high capacity, and a long life in the charge-discharge cycle.

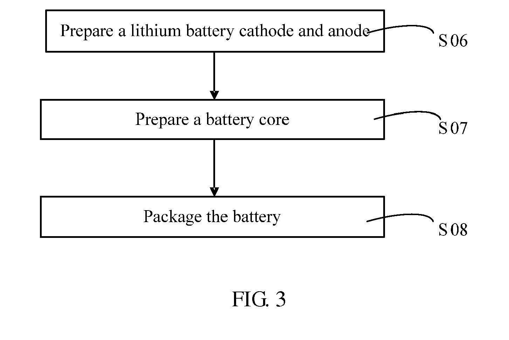

Correspondingly, an embodiment of the present invention further provides a process for constructing a lithium battery. As illustrated in FIG. 3, the process of constructing the lithium battery includes the following steps:

Step S08: Construct an anode and a cathode of the lithium battery, where the lithium anode is constructed according to the aforementioned process for constructing the lithium battery anode.

Step S09: Construct a battery core: Laminate the battery anode and cathode constructed in step S08 into a sequentially layered structure of lithium battery anode/separation film/lithium cathode, and wind them into a battery core.

Step S10: Package the battery: Load the core into a battery casing, and then inject electrolyte into the casing, and seal it to produce a lithium battery.

Specifically, a conventional process in the art may be used as the process for constructing the anode in step S08, the process for constructing the battery core in step S09, and the process for packaging the battery in step S10. The battery core in step S09 may be of a rectangular shape, or another shape depending on the lithium battery needs. In this way, the lithium battery can be made at high pass rates under mature technologies and easy-to-control conditions.

An embodiment of the present invention further provides an application scope of the lithium battery. The application scope includes mobile terminal products, electric vehicles, power grids, communications devices, electric tools, and the like. For example, when the lithium battery is a lithium-ion battery, the lithium-ion battery is applied in communications devices. Specifically, the communications device includes a working module and a power supply module. The power supply module provides power to the working module, and includes the lithium-ion battery, where the lithium-ion battery may be one or more than two in number. When the power supply module includes more than two lithium-ion batteries, the lithium-ion batteries may be connected in parallel and/or in series, depending on the electric energy required by the working module. The working module runs under the electric energy provided by the power supply module. Because of excellent energy density, discharge capacity, cycle life, and rate performance of the lithium battery, the application scope of the lithium-ion battery is expanded. When the lithium-ion battery is applied in mobile terminal products, electric vehicles, power grids, communications devices, and electric tools, the lithium-ion battery can provide stable and continuous electric energy for working modules in the mobile terminal products, electric vehicles, power grids, communications devices, electric tools, reduce the frequency of changing electrochemical power supplies, and improve ease of using the mobile terminal products, electric vehicles, power grids, communications devices, and electric tools.

The following uses multiple embodiments and examples to describe the lithium-rich anode material, the process for constructing the lithium-rich anode material, the lithium battery anode, the process for constructing the lithium battery anode, the lithium battery, and the process for constructing the lithium battery.

### Example 1

A lithium-rich anode material and a process for constructing the same are provided as follows:

Step S11: Construct a precursor of a lithium-rich anode material whose structural formula is 0.5Li₂MnO₃·0.5LiNi_{1/3}Co_{1/3}Mn_{1/3}O₂:

S011: Construct a 50 ml mixed solution with a molar ratio of Ni(NO₃)₂:Co(NO₃)₂:Mn(NO₃)₂= 0.13:0.13:0.54, and with a molar concentration of 2 mol/L.

S012: Add the mixed solution in step S011 into an oxyhydroxide solution of a concentration 2 mol/L, agitate the solution to make it react, filter the generated precipitate, wash it with distilled water, and dry it in an environment protected with 200°C argon for 12 hours to obtain a dry precipitate.

S013: Mix the precipitate in step S012 with a lithium hydroxide into a mixture with a molar ratio 1:1.05, press the mixture into pellets, perform a first sintering process at 400°C in an argon environment for 3 hours, pulverize the pellets, and then perform a second sintering process at 850°C in an argon environment for 12 hours to obtain a precursor of the lithium-rich anode material whose structural formula is 0.5Li₂MnO₃·0.5LiNi_{1/3}Co_{1/3}Mn_{1/3}O₂.

Step S 12: Construct a mixed solution:

Dissolve 0.01 mol ammonium dihydrogen phosphate, 0.01 mol ferrous nitrate, and 0.01 mol lithium nitrate in a 50 ml glycolic acid solvent to generate a mixed solution.

Step S 13: Construct a dry mixture:

Disperse the precursor of the lithium-rich anode material in step S11 into the mixed solution in step S12, and then put the solution into a water bath in an argon-protected environment, and agitate and dry the solution in the water bath below 90°C for 12 hours to obtain a dry mixture.

Step S 14: Anneal the dry mixture:

Pulverize the dry mixture in step S13, press it into pellets, put the pellets into a muffle furnace, anneal them in a 750°C oxygen-free environment for 24 h, and cool them to obtain the lithium-rich anode material whose structural formula is 0.9[0.5Li₂MnO₃·0.5LiNi_{1/3}Co_{1/3}Mn_{1/3}O₂]·0.1LiFePO₄.

### Example 2

A lithium-rich anode material and a process for constructing the same are provided as follows:

Step S21: Construct a precursor of a lithium-rich anode material whose structural formula is 0.9Li₂MnO₃·0.1LiNi_{0.5}Mn_{1.5}O₂:

S021: Construct a 50 ml mixed solution with a molar ratio of Ni(NO₃)₂:Mn(NO₃)₂ = 0.05:1.05, and with a molar concentration of 2 mol/L.

S022: Add the mixed solution in step S021 into an oxyhydroxide solution of a concentration 2 mol/L, agitate the solution to make it react, filter the generated precipitate, wash it with distilled water, and dry it in an environment protected with 200°C argon for 12 hours to obtain a dry precipitate.

S023: Mix the precipitate in step S022 with a lithium hydroxide into a mixture with a molar ratio 1:1.05, press the mixture into pellets, perform a first sintering process at 400°C in an argon environment for 3 hours, pulverize the pellets, and then perform a second sintering process at 850°C in an argon environment for 12 hours to obtain a precursor of the lithium-rich anode material whose structural formula is 0.9Li₂MnO₃·0.1LiNi_{0.5}Mn_{1.5}O₂.

Step S22: Construct a mixed solution:

Dissolve 0.04 mol ammonium dihydrogen phosphate, 0.04 mol nickel nitrate, and 0.04 mol lithium nitrate in a 50 ml glycolic acid solvent to generate a mixed solution.

Step S23: Construct a dry mixture:

Disperse the precursor of the lithium-rich anode material in step S21 into the mixed solution in step S22, and then put the solution into a water bath in an argon-protected environment, and agitate and dry the solution in the water bath below 90°C for 12 hours to obtain a dry mixture.

Step S24: Anneal the dry mixture:

Pulverize the dry mixture in step S13, press it into pellets, put the pellets into a muffle furnace, anneal them in an 800°C oxygen-free environment for 24 h, and cool them to obtain the lithium-rich anode material whose structural formula is 0.7[0.9Li₂MnO₃·0.1LiNi_{0.5}Mn_{1.5}O₂] ·0.3LiNiPO₄.

### Example 3

A lithium-rich anode material and a process for constructing the same are provided as follows:

Step S31: Construct a precursor of a lithium-rich anode material whose structural formula is 0.85Li₂ZrO₃·0.15LiNi_{2/5}CO_{2/5}Mn_{1/5}O₂:

S031: Construct a 50 ml mixed solution with a molar ratio of Zr(NO₃)₂:Ni(NO₃)₂:Co(NO₃)₂:Mn(NO₃)₂ - 0.85:0.06:0.06:0.03, and with a molar concentration of 2 mol/L.

S032: Add the mixed solution in step S031 into an oxyhydroxide solution of a concentration 2 mol/L, agitate the solution to make it react, filter the generated precipitate, wash it with distilled water, and dry it in an environment protected with 200°C argon for 12 hours to obtain a dry precipitate.

S033: Mix the precipitate in step S032 with a lithium hydroxide into a mixture with a molar ratio 1:1.05, press the mixture into pellets, perform a first sintering process at 400°C in an argon environment for 3 hours, pulverize the pellets, and then perform a second sintering process at 850°C in an argon environment for 12 hours to obtain a precursor of the lithium-rich anode material whose structural formula is 0.85Li₂ZrO₃·0.15LiNi_{2/5}Co_{2/5}Mn_{1/5}O₂.

Step S32: Construct a mixed solution:

Dissolve 0.1 mol ammonium dihydrogen phosphate, 0.025 mol magnesium nitrate, 0.075 mol cobalt nitrate, and 0.1 mol lithium nitrate in a 50 ml glycolic acid solvent to generate a mixed solution.

Step S33: Construct a dry mixture:

Disperse the precursor of the lithium-rich anode material in step S31 into the mixed solution in step S32, and then put the solution into a water bath in an argon-protected environment, and agitate and dry the solution in the water bath below 90°C for 12 hours to obtain a dry mixture.

Step S34: Anneal the dry mixture:

Pulverize the dry mixture in step S33, press it into pellets, put the pellets into a muffle furnace, anneal them in a 550°C oxygen-free environment for 48 h, and cool them to obtain the lithium-rich anode material whose structural formula is 0.5[0.85Li₂ZrO₃·0.15LiNi_{2/5}Co_{2/5}Mn_{1/5}O₂]·0.5LiCo_{0.075}Mg_{0.025}PO₄.

Comparative Example

A lithium-rich anode material and a lithium-ion battery are provided.

Lithium-rich anode material: with a structural formula 0.9Li₂MnO₃·0.1LiNi_{0.5}Mn_{1.5}O₂.

A lithium-ion battery containing a lithium-rich anode material and a process for constructing the same are as follows:

Construct lithium battery anode: Blend an anode material, a graphite serving as an electrode conductive agent, a bonding agent CMC, and water serving as a solvent with a weight ratio of 8:1:1:100, agitate them in a vacuum high-speed agitator for 4 to 8 hours to form a uniform anode slurry, coat a copper foil with the anode slurry uniformly, dry the copper foil in a vacuum at 120°C for 24 hours, and press-roll and cut the copper foil into anode sheets of a 15 mm diameter.

Construct a lithium battery cathode: a metal lithium sheet of a 15 mm diameter and a 0.3 mm thickness.

Laminate the anode sheet, the cathode sheet, and a Celgard2400 polypropylene porous film into a sequentially layered structure of anode sheet/separation film/cathode sheet, wind them into a rectangular battery pole core, and fill the battery casing with electrolyte, and seal the casing to generate a clasp-type lithium-ion battery. The electrolyte is a mixed solution of 1 M lithium hexafluorophosphate (LiPF6) + ethylene carbonate/dimethyl carbonate (volume ratio of EC/DMC is 1:1).

According to the process for constructing the lithium-ion battery, lithium batteries that include the lithium-rich anode material are made from the lithium-rich anode material whose structural formula is 0.7[0.9Li₂MnO₃·0.1LiNi_{0.5}Mn_{1.5}O₂]·0.3LiNiPO₄ constructed in Example 2, and the battery numbers are set to 1.1, 1.2, and 1.3. Lithium batteries that include the lithium-rich anode material are made from the lithium-rich anode material whose structural formula is 0.9Li₂MnO₃·0·1LiNi_{0.5}Mn_{1.5}O₂ constructed in the Comparative Example, and the battery numbers are set to 2.1, 2.2, and 2.3. Batteries 1.1 and 2.1 are the same except materials; and batteries 1.2 and 2.2 are the same except materials, and batteries 1.3 and 2.3 are the same, except materials.

Lithium-ion Battery Performance Test:

An electrochemical performance test is performed on the lithium-ion batteries constructed in Example 2 and the Comparative Example.

The charge-discharge performance test mode and the cycle performance test mode are illustrated in the following tables.

Results of the charge-discharge performance test, cycle performance test, and initial discharge capacity test are illustrated in Tables 1-3:

**Table 1**

| **Serial number of battery** | **Initial discharge capacity mAh/g** | **Initial charge-discharge efficiency %** | **Capacity of 50 cycles mAh/g** |
|---|---|---|---|
| 1.1 | 209 | 84.6 | 190 |
| 2.1 | 183 | 78.4 | 157 |
| Note: Charge-discharge current: 0.1C, charge-discharge voltage interval: 2-4.6 V. | | | |

**Table 2**

| **Serial number of battery** | **Initial discharge capacity mAh/g** | **Initial charge-discharge efficiency %** | **Capacity of 50 cycles mAh/g** |
|---|---|---|---|
| 1.2 | 232 | 83.4 | 197 |
| 2.2 | 201 | 73.1 | 154 |
| Note: Charge-discharge current: 0.1C, charge-discharge voltage interval: 2-4.8 V. | | | |

**Table 3**

| **Serial number of battery** | **Initial discharge capacity mAh/g** | **Initial charge-discharge efficiency %** | **Capacity of 50 cycles mAh/g** |
|---|---|---|---|
| 1.3 | 198 | 83.6 | 170 |
| 2.3 | 175 | 75.4 | 134 |
| Note: Charge-discharge current: 1C, charge-discharge voltage interval: 2-4.6 V. | | | |

From test data comparison between Table 1, Table 2, and Table 3, we can draw the following conclusion: The lithium-rich solid solution (z[xLi₂MO₃•(1-x)LiMeO₂] •(1-z)Li_{3-2y}M'_{2y}PO₄) of a Layered-Olivine structure has better discharge capacity (see the discharge capacity in Tables 1, 2 and 3), better initial charge-discharge efficiency (see the charge-discharge efficiency in Tables 1 and 2), better cycle performance (see the cycle performance in Tables 1, 2 and 3), and better rate performance (see the test data comparison in Table 3) than the conventional lithium-rich solid solution (xLi₂MO₃ •(1-x)LiMeO₂) of a Layered-Layered structure and the conventional lithium-rich solid solution of a Layered-Olivine structure. Meanwhile, the lithium-rich solid solution of a Layered-Olivine structure can withstand higher voltages of charge and discharge (see the test data comparison in Table 2).

The foregoing descriptions are merely exemplary embodiments of the present invention, but are not intended to limit the present invention. Any modifications, equivalent replacements, and improvements made within the spirit and principle of the present invention shall fall within the protection scope of the present invention.

## Claims

1. A lithium-rich anode material, a structural formula of the material being:
z[xLi₂MO₃·(1-x)LiMeO₂]·(1-z)Li_{3-2y}M'_{2y}PO₄, wherein
Li_{3-2y}M'_{2y}PO₄ is distributed as an olivine structure in a lattice of xLi₂MO₃·(1-x)LiMeO₂; x and z are molar stoichiometric ratios, and 0 < x < 1,0<y<1, 0<z<1; M is at least one of elements Mn, Ti, Zr, and Cr, Me is at least one of elements Mn, Co, Ni, Ti, Cr, V, Fe, Al, Mg, and Zr, and M' is at least one of elements Fe, Co, Ni, V, Mg, and Mn.

2. The lithium-rich anode material according to claim 1, wherein the structural formula z[xLi₂MO₃·(1-x)LiMeO₂]·(1-z)Li_{3-2y}M'_{2y}PO₄ is in a layered-olivine structure.

3. The lithium-rich anode material according to claim 1, wherein a particle size of the lithium-rich anode material is from 1 µm to 15 µm.

4. A process for constructing a lithium-rich anode material, comprising the following steps:
obtaining a precursor of a lithium-rich anode material whose structural formula is xLi₂MO₃·(1-x)LiMeO₂, wherein x is a molar stoichiometric ratio, 0 < x < 1, M is at least one of elements Mn, Ti, Zr, and Cr, and Me is at least one of elements Mn, Co, Ni, Ti, Cr, V, Fe, Al, Mg, and Zr;
dissolving ammonium phosphate salt, soluble M' salt, and soluble lithium salt in a solvent according to molar stoichiometric ratios of corresponding elements in a structural formula Li_{3-2y} M'_{2y}PO₄ to construct a mixed solution, wherein 0 < y < 1, M' is at least one of elements Fe, Co, Ni, V, Mg, and Mn;
dispersing the precursor of the lithium-rich anode material into the mixed solution according to molar stoichiometric ratios of xLi₂MO₃·(1-x) LiMeO₂ and Li_{3-2y}M'_{2y}PO₄ in a structural formula z[xLi₂MO₃·(1-x)LiMeO₂]·(1-z)Li_{3-2y}M'_{2y}PO₄, and then stirring the solution in a water bath of an oxygen-free environment until the solution is dried to obtain a dry mixture; and
pulverizing the dry mixture, annealing it in an oxygen-free environment, and cooling it to obtain the lithium-rich anode material whose structural formula is z[xLi₂MO₃·(1-x)LiMeO₂]·(1-z)Li_{3-2y}M'_{2y}PO₄.

5. The process for constructing a lithium-rich anode material according to claim 4, wherein in the step of constructing the mixed solution, the soluble M' salt is at least one of a nitrate, sulfate, acetate, and chloride of M'.

6. The process for constructing a lithium-rich anode material according to claim 4, wherein in the step of constructing the mixed solution, the soluble lithium salt is at least one of a lithium nitrate, a lithium sulfate, a lithium acetate, and a lithium chloride.

7. The process for constructing a lithium-rich anode material according to claim 4, wherein in the step of constructing the mixed solution, the solvent is at least one of a glycolic acid and a formic acid.

8. The process for constructing a lithium-rich anode material according to any one of claims 4 to 7, wherein the M' salt is an M' nitrate, and the soluble lithium salt is a lithium nitrate.

9. The process for constructing a lithium-rich anode material according to claim 4, wherein in the step of constructing the dry mixture, a temperature of the annealing treatment is from 500°C to 800°C, and annealing duration is from 12 h to 48 h.

10. The process for constructing a lithium-rich anode material according to claim 4, wherein in the step of constructing the dry mixture, a temperature of the water bath agitation is from 50°C to 100°C.

11. The process for constructing a lithium-rich anode material according to claim 4, wherein the oxygen-free environment is an environment filled with an inert gas or a vacuum environment.

12. The process for constructing a lithium-rich anode material according to claim 4, wherein the process for obtaining a precursor of a lithium-rich anode material whose structural formula is xLi₂MO₃·(1-x)LiMeO₂ is:
weighing out M(NO₃)₂, Me(NO₃)₂, and a lithium compound according to molar stoichiometric ratios of corresponding elements in the structural formula xLi₂MO₃·(1-x)LiMeO₂;
dissolving the M(NO₃)₂ and the Me(NO₃)₂ to construct a second mixed solution;
adding the second mixed solution into an oxyhydroxide solution, stirring the solution to make it react, separating solid from liquid of a generated precipitate, washing the solid, and drying it in an oxygen-free environment to obtain a dry precipitate; and
mixing the precipitate with the lithium compound into a mixture, performing a first sintering process for the mixture in an oxygen-free environment, pulverizing the mixture, and then performing a second sintering process in an oxygen-free environment to obtain the precursor of the lithium-rich anode material whose structural formula is xLi₂MO₃·(1-x)LiMeO₂.

13. The process for constructing a lithium-rich anode material according to claim 12, wherein a temperature of the first sintering process is from 350°C to 600°C, and a sintering duration is from 3 h to 12 h.

14. The process for constructing a lithium-rich anode material according to claim 12, wherein a temperature of the second sintering process is from 700°C to 1000°C, and a sintering duration is from 3 h to 12 h.

15. The process for constructing a lithium-rich anode material according to claim 12, wherein the lithium compound is at least one of a lithium hydroxide and a lithium salt.

16. A lithium battery anode, comprising a current collector and an anode material bonded to the current collector, wherein the anode material is the lithium-rich anode material according to any one of claims 1 to 3.

17. A lithium battery, comprising the lithium battery anode according to claim 16.
